(19) Europäisches Patentamt
European Patent Office
Office européen des brevets

(11) **EP 4 579 769 A1**

(12) **EUROPEAN PATENT APPLICATION**
published in accordance with Art. 153(4) EPC

(43) Date of publication:
**02.07.2025 Bulletin 2025/27**

(21) Application number: **22960223.0**

(22) Date of filing: **30.09.2022**

(51) International Patent Classification (IPC):
**H01M 4/02** $^{(2006.01)}$    **H01M 4/583** $^{(2010.01)}$

(52) Cooperative Patent Classification (CPC):
**H01M 4/02; H01M 4/583;** Y02E 60/10

(86) International application number:
**PCT/CN2022/123057**

(87) International publication number:
**WO 2024/065595 (04.04.2024 Gazette 2024/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• YAN, Yi
  **Ningde, Fujian 352100 (CN)**
• DONG, Jiali
  **Ningde, Fujian 352100 (CN)**
• XIE, Yuansen
  **Ningde, Fujian 352100 (CN)**

(74) Representative: **Icosa**
  **83 avenue Denfert-Rochereau**
  **75014 Paris (FR)**

(54) **NEGATIVE ELECTRODE MATERIAL, SECONDARY BATTERY AND ELECTRONIC DEVICE**

(57)    A negative electrode material is provided, containing a carbon-based material. In an X-ray diffraction pattern of the negative electrode material tested by X-ray diffractometry, a diffraction peak a is exhibited at a diffraction angle $2\theta$ of 43° to 44°, a diffraction peak b is exhibited at a diffraction angle $2\theta$ of 45° to 47°, an intensity of the diffraction peak a is $I_a$, and an intensity of the diffraction peak b is $I_b$, satisfying: $I_a/I_b > 1$. The negative electrode material of this application exhibits excellent kinetic performance, and therefore, can effectively reduce the internal resistance of a secondary battery containing the negative electrode material and enhance overall performance of the secondary battery. A secondary battery containing the negative electrode material is also provided.

FIG. 1

EP 4 579 769 A1

**Description**

**TECHNICAL FIELD**

This application relates to the field of energy storage, and in particular, to a negative electrode material, a secondary battery, and an electronic device.

**BACKGROUND**

With the electrochemical devices such as lithium-ion batteries having become widely used energy systems, the specific applications of the electrochemical devices are more diversified, among which the fast-charge/discharge is an important application. Therefore, the development of energy systems of superior charge-discharge performance is essential for the large-scale application of the electrochemical devices in transportation, power grids, wind energy systems, and solar energy systems.

However, fast-charge/discharge incurs some problems. For example, when a lithium-ion battery is charged or discharged at a large C-rate, an internal resistance of the battery itself leads to a rapid rise in temperature during the charge or discharge. This makes the battery stay in a high-temperature environment, and impairs the cycle performance and safety performance of the battery enormously. Therefore, the consumer market is in urgent need of the batteries with a relatively low internal resistance. It is necessary to develop the batteries with a relatively low internal resistance. Existing methods for reducing the internal resistance of a battery are mainly to reduce the coating thickness of an electrode plate and reduce the particle size of a negative active material. However, such methods obviously reduce the energy density and durability of the battery and are costly. Therefore, it is extremely necessary to develop a negative electrode material of a low internal resistance without compromising other performance metrics.

**SUMMARY**

In view of the above problems in the prior art, this application provides a negative electrode material and a secondary battery containing the negative electrode material to improve kinetic performance of the negative electrode material, and in turn, reduce the internal resistance of the secondary battery, and enhance overall performance of the secondary battery.

According to a first aspect, a negative electrode material is provided. The negative electrode material contains a carbon-based material. In an X-ray diffraction pattern of the negative electrode material tested by X-ray diffractometry, a diffraction peak a is exhibited at a diffraction angle $2\theta$ of 43° to 44°, a diffraction peak b is exhibited at a diffraction angle $2\theta$ of 45° to 47°, an intensity of the diffraction peak a is $I_a$, and an intensity of the diffraction peak b is $I_b$, satisfying: $I_a/I_b > 1$. The diffraction peak a and the diffraction peak b of the negative electrode material are related to a stacking sequence of rhombic (3R) graphene layers in the graphite. In the X-ray diffraction pattern of the negative electrode material of this application, the diffraction peak a and the diffraction peak b are exhibited, and the peak intensity of the diffraction peak a is higher than that of the diffraction peak b, indicating that an unstable rhombohedron structure exists in the formed graphite to facilitate intercalation and deintercalation of lithium and reduce the internal resistance of the battery. In some embodiments, $2 \leq I_a/I_b \leq 6$.

In some embodiments, $400 \leq I_a \leq 2500$. In some embodiments, $0 \leq I_b \leq 600$.

In some embodiments, as tested by the X-ray diffractometry, a ratio of a peak area $C_{004}$ of a (004) crystal plane diffraction peak to a peak area $C_{110}$ of a (110) crystal plane diffraction peak of the negative electrode material satisfies: $1 \leq C_{004}/C_{110} \leq 4$. The $C_{004}/C_{110}$ ratio is a parameter that reflects the orientation index of the crystals of the negative electrode material. The higher the $C_{004}/C_{110}$ ratio, the higher the orientation index of the crystals, and the fewer the directions in which the active ions are deintercalated in the negative electrode material. The lower the $C_{004}/C_{110}$ ratio, the lower the orientation index of the crystals, and the more the directions in which the active ions are deintercalated in the negative electrode material. The $C_{004}/C_{110}$ ratio of the negative electrode material of this application falls within the above range, so that the active ions can be rapidly de-intercalated from the negative electrode material, thereby further improving the kinetic performance of the secondary battery. In some embodiments, $1 \leq C_{004}/C_{110} \leq 3$.

In some embodiments, as tested by the X-ray diffractometry, an average stacking thickness of the negative electrode material along an a-axis direction is $L_a$, satisfying: $100 \, nm \leq L_a \leq 160 \, nm$. In some embodiments, as tested by the X-ray diffractometry, an average stacking thickness of the negative electrode material along a c-axis direction is $L_c$, satisfying: $18 \, nm \leq L_c \leq 30 \, nm$. $L_a$ represents an average size of the crystals of the negative electrode material along the a-axis direction. $L_c$ represents the stacking thickness of microcrystals of the negative electrode material along the c-axis direction perpendicular to the negative electrode material. The values of $L_a$ and $L_c$ can characterize the graphitization degree of the negative electrode material. The larger the values of $L_a$ and $L_c$, the higher the gravimetric capacity of the negative electrode material. However, when the values of $L_c$ and $L_a$ are unduly large, the gravimetric capacity of the negative electrode material is increased, but the cycle performance of the material will decline. The values of $L_c$ and $L_a$ of the negative electrode material of this application fall within the above ranges. Therefore, the negative electrode material achieves a high gravimetric capacity without significantly reducing the cycle performance. In some embodiments, 110 nm $\leq L_a \leq$ 160 nm. In some embodiments, 20 nm $\leq L_c \leq$ 30 nm.

In some embodiments, $D_{n10}$ of the negative electrode material is greater than or equal to 0.4 $\mu$m. $D_{n10}$ characterizes the content of fine powder in the negative electrode material. A smaller value of this parameter represents a higher content of fine powder in the negative electrode material. When the content of fine powder is unduly high, the negative electrode material consumes more lithium ions during the first-cycle lithiation, thereby reducing the first-cycle Coulombic efficiency. In some embodiments, $D_{n10}$ of the negative electrode material is greater than or equal to 0.5 $\mu$m.

In some embodiments, $D_{v10}$ and $D_{v90}$ of the negative electrode material satisfy: $5 \leq D_{v90}/D_{v10} \leq 25$. The $D_{v90}/D_{v10}$ ratio indicates the concentration of particle size distribution in the negative electrode material. The higher the ratio, the more dispersed the particle size distribution of the material. The lower the ratio, the more concentrated the particle size distribution of the material. When the volume fraction of the negative electrode material remains constant, the larger the particle size of the material, the wider the distribution of the particles, and the lower the viscosity of the negative electrode slurry. This can increase the solid content and reduce the coating difficulty. Meanwhile, when the particle size distribution is relatively wide, small particles can fill in the voids of large particles, thereby increasing the compaction density of the electrode plate, and improving the volumetric energy density of the secondary battery. In addition, the particle morphology also exerts a great impact on the C-rate performance and the low-temperature performance of the secondary battery. The $D_{v90}/D_{v10}$ ratio of the negative electrode material of this application falls within the above range. Therefore, the secondary battery containing the negative electrode material achieves a high energy density without impairing the electrical performance such as C-rate performance and low-temperature performance of the battery. In some embodiments, $5 \leq D_{v90}/D_{v10} \leq 15$.

In some embodiments, $D_{v90}$ of the negative electrode material is 30 $\mu$m to 65 $\mu$m. In some embodiments, $D_{v10}$ of the negative electrode material is 2 $\mu$m to 8 $\mu$m. Overlarge particles of the negative electrode material deteriorate the slurry processing performance, and undersized particles of the negative electrode material reduce the first-cycle Coulombic efficiency of the material. In some embodiments, $D_{v90}$ is 30 $\mu$m to 60 $\mu$m. In some embodiments, $D_{v10}$ is 3 $\mu$m to 7 $\mu$m.

In some embodiments, the powder compaction density of the negative electrode material pressed with a force equivalent to 5 tons is C, satisfying: 1.5 g/cm$^3$ $\leq$ C $\leq$ 2.5 g/cm$^3$. The powder compaction density represents the compressibility of the negative electrode material being pressed. The higher the powder compaction density, the more compressible the material being pressed, and the higher the volumetric energy density of the secondary battery. The powder compaction density of the negative electrode material of this application falls within the above range. Therefore, the secondary battery containing the negative electrode material achieves a high energy density. In some embodiments, 1.8 g/cm$^3$ $\leq$ C $\leq$ 2.1 g/cm$^3$.

In some embodiments, the carbon-based material includes graphite. The graphite includes one or more of artificial graphite or natural graphite. In some embodiments, a method for preparing the carbon-based material includes: making one or more of natural graphite or artificial graphite into a graphitic composite material, and then spheroidizing, coating, and carbonizing the graphitic composite material.

In some embodiments, a process of preparing the graphitic composite material includes: Dissolving one or more of natural graphite or artificial graphite and polymethylmethacrylate (PMMA) simultaneously in N-N dimethylformamide (DMF), stirring the solution at a temperature of 50 °C to 80 °C for 10 h to 14 h, filtering the solution and collecting sediment, washing the sediment with deionized water and ethanol for 2 to 4 times, and drying the sediment thoroughly at a temperature of 60 °C to 90 °C to obtain a graphitic composite material precursor; heating the graphitic composite material precursor in a tube furnace until 1000 °C to 1200 °C at a heating rate of 8 °C/min to 16 °C/min; subsequently, passing a gas of $CH_4$, $C_2H_2$, and $H_2$ mixed at the mixing ratio of (5 to 10): (5 to 10): (80 to 85) into the tube furnace; keeping the temperature for 8 h to 12 h, and then naturally cooling the precursor to a room temperature to obtain a graphitic composite material.

In some embodiments, the spheroidization process includes: Applying continuous impact forces, compression forces, and shear forces from a turntable, an inner wall, and particle interstices to the mixture containing both the graphitic composite material and a dispersant solution, so as to spheroidize the graphitic composite material. In some embodiments, the spheroidization duration is 10 min to 20 min. In some embodiments, the impact forces, compression forces, and shear forces are applied to the mixture by using a spheroidization apparatus, thereby impacting, rubbing, shearing, bending, and folding the mixture, and in turn, removing the angular corner of the graphitic composite material and, at the same time, fixing micropowder onto larger particles. In some embodiments, the spheroidization apparatus is a mixing granulator. In some embodiments, the rotation speed of the spheroidization apparatus is 30 Hz to 50 Hz. In some embodiments, the dispersant solution is an aqueous solution of carboxymethyl cellulose (CMC). In some embodiments, the mass percent of the carboxymethyl cellulose in the dispersant solution is 0.5% to 2%. In some embodiments, based on the mass of the graphitic composite material, the mass percent of the dispersant solution is 5% to 20%.

In some embodiments, the coating process includes: Coating the spheroidized graphitic composite material with pitch. In some embodiments, based on the mass of the spheroidized graphitic composite material, the mass percent of the pitch is 2% to 15%. In some embodiments, the carbonization treatment is performed at a temperature of 900 °C to 1500 °C.

According to a second aspect, this application provides a secondary battery. The secondary battery includes a negative electrode. The negative electrode includes a negative current collector and a negative active material layer disposed on at least one surface of the negative current collector. The negative active material layer includes the negative electrode material according to the first aspect.

In some embodiments, the negative electrode further includes a conductive coating layer located between the negative active material layer and the negative current collector. In some embodiments, the conductive coating layer includes at least one of carbon fibers, Ketjen black, acetylene black, carbon nanotubes, or graphene. The conductive coating layer serves to conduct electrons, and reduces the charge transfer resistance significantly, thereby further enhancing the kinetic performance of the secondary battery. In some embodiments, the thickness of the conductive coating layer is 0.5 $\mu$m to 1.2 $\mu$m.

According to a third aspect, this application provides an electronic device. The electronic device includes the secondary battery according to the second aspect.

By spheroidizing, coating, and carbonizing the graphite material, this application reduces the particle size of the graphite material, and transforms the irregular morphology into a regular spherical morphology, thereby significantly enhancing the kinetic performance of the negative electrode material, further reducing the internal resistance of the secondary battery, and enhancing the overall performance of the secondary battery.

**BRIEF DESCRIPTION OF DRAWINGS**

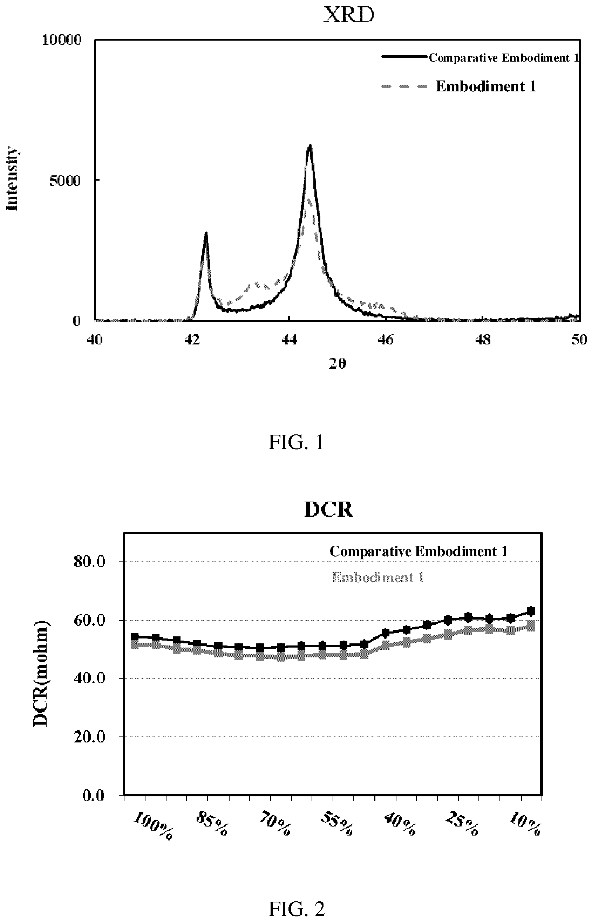

FIG. 1 is an XRD pattern of a negative electrode material according to Embodiment 1 and Comparative Embodiment 1 of this application; and
FIG. 2 shows a DCR curve of a lithium-ion battery according to Embodiment 1 and Comparative Embodiment 1 of this application.

**DETAILED DESCRIPTION OF EMBODIMENTS**

For brevity, some specific value ranges are disclosed herein. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by various measurement methods commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

The following describes this application in more detail with reference to specific embodiments. Understandably, the specific embodiments are merely intended to illustrate this application but not intended to limit the scope of this application.

**I. Negative electrode material**

A negative electrode material provided in this application contains a carbon-based material. In an X-ray diffraction pattern of the negative electrode material tested by X-ray diffractometry, a diffraction peak a is exhibited at a diffraction angle $2\theta$ of 43° to 44°, a diffraction peak b is exhibited at a diffraction angle $2\theta$ of 45° to 47°, an intensity of the diffraction peak a is $I_a$, and an intensity of the diffraction peak b is $I_b$, satisfying: $I_a/I_b > 1$. The diffraction peak a and the diffraction peak b of the negative electrode material are related to a stacking sequence of rhombic (3R) graphene layers in the graphite. In the X-ray diffraction pattern of the negative electrode material of this application, the diffraction peak a and the diffraction peak b are exhibited, and the peak intensity of the diffraction peak a is higher than that of the diffraction peak b, indicating that a rhombohedron structure exists in the formed graphite to facilitate intercalation and deintercalation of lithium and achieve a relatively high gravimetric capacity. In some embodiments, the $I_a/I_b$ ratio is 1.2, 1.4, 1.6, 1.8, 2.3, 2.5, 2.7, 3.0, 3.3, 3.5, 3.7, 4.0, 4.3, 4.5, 4.7, 5.0, 5.3, 5.5, 5.7, 5.9, or a value falling within a range formed by any two thereof. In some embodiments, $2 \leq I_a/I_b \leq 6$.

In some embodiments, $400 \leq I_a \leq 2500$. In some embodiments, $I_a$ is 500, 600, 700, 800, 900, 1000, 1100, 1200, 1300, 1400, 1500, 1600, 1700, 1800, 1900, 2000, 2100, 2200, 2300, 2400, or a value falling within a range formed by any two thereof. In some embodiments, $0 \leq I_b \leq 600$. In some embodiments, $I_b$ is 50, 100, 150, 200, 300, 350, 400, 450, 500, 550, or a value falling within a range formed by any two thereof. In this application, $I_a$ is a maximum intensity value of the diffraction peak a exhibited at a diffraction angle 2θ of 43° to 44°. $I_b$ is a maximum intensity value of the diffraction peak b exhibited at a diffraction angle 2θ of 45° to 47°.

In some embodiments, as tested by the X-ray diffractometry, a ratio of a peak area $C_{004}$ of a (004) crystal plane diffraction peak to a peak area $C_{110}$ of a (110) crystal plane diffraction peak of the negative electrode material satisfies: $1 \leq C_{004}/C_{110} \leq 4$. The $C_{004}/C_{110}$ ratio is a parameter that reflects the orientation index of the crystals of the negative electrode material. The higher the $C_{004}/C_{110}$ ratio, the higher the orientation index of the crystals, and the fewer the directions in which the active ions are deintercalated in the negative electrode material. The lower the $C_{004}/C_{110}$ ratio, the lower the orientation index of the crystals, and the more the directions in which the active ions are deintercalated in the negative electrode material. The $C_{004}/C_{110}$ ratio of the negative electrode material of this application falls within the above range, so that the active ions can be rapidly de-intercalated from the negative electrode material, thereby further improving the kinetic performance of the secondary battery. In some embodiments, the $C_{004}/C_{110}$ ratio is 1.2, 1.4, 1.6, 1.8, 2.3, 2.5, 2.7, 3.0, 3.3, 3.5, 3.7, or a value falling within a range formed by any two thereof. In some embodiments, $1 \leq C_{004}/C_{110} \leq 3$.

In some embodiments, as tested by the X-ray diffractometry, an average stacking thickness of the negative electrode material along an a-axis direction is $L_a$, satisfying: $100\,nm \leq L_a \leq 160\,nm$. In some embodiments, $L_a$ is 100 nm, 103 nm, 105 nm, 107 nm, 110 nm, 113 nm, 115 nm, 117 nm, 120 nm, 123 nm, 125 nm, 127 nm, 130 nm, 143 nm, 145 nm, 147 nm, 150 nm, 153 nm, 155 nm, 157 nm, or a value falling within a range formed by any two thereof. In some embodiments, as tested by the X-ray diffractometry, an average stacking thickness of the negative electrode material along a c-axis direction is $L_c$, satisfying: $18\,nm \leq L_c \leq 30\,nm$. In some embodiments, $L_c$ is 19 nm, 20 nm, 21 nm, 22 nm, 23 nm, 24 nm, 25 nm, 26 nm, 27 nm, 28 nm, 29 nm, or a value falling within a range formed by any two thereof. $L_a$ represents an average size of the crystals of the negative electrode material along the a-axis direction. $L_c$ represents the stacking thickness of microcrystals of the negative electrode material along the c-axis direction perpendicular to the negative electrode material. The values of $L_a$ and $L_c$ can characterize the graphitization degree of the negative electrode material. The larger the values of $L_a$ and $L_c$, the higher the gravimetric capacity of the negative electrode material. However, when the values of $L_c$ and $L_a$ are unduly large, the gravimetric capacity of the negative electrode material is increased, but the cycle performance of the material will decline. The values of $L_c$ and $L_a$ of the negative electrode material of this application fall within the above ranges. Therefore, the negative electrode material achieves a high gravimetric capacity without significantly reducing the cycle performance. In some embodiments, $110\,nm \leq L_a \leq 160\,nm$. In some embodiments, $20\,nm \leq L_c \leq 30\,nm$.

In some embodiments, $D_{n10}$ of the negative electrode material is greater than or equal to 0.4 μm. $D_{n10}$ characterizes the content of fine powder in the negative electrode material. A smaller value of this parameter represents a higher content of fine powder in the negative electrode material. When the content of fine powder is unduly high, the negative electrode material consumes more lithium ions during the first-cycle lithiation, thereby reducing the first-cycle Coulombic efficiency. In some embodiments, $D_{n10}$ is 0.45 μm, 0.5 μm, 0.55 μm, 0.6 μm, 0.65 μm, 0.7 μm, 0.75 μm, 0.8 μm, 0.85 μm, 0.9 μm, 0.95 μm, 1.0 μm, 1.05 μm, 1.1 μm, 1.15 μm, 1.2 μm, 1.25 μm, 1.3 μm, 1.35 μm, 1.4 μm, 1.45 μm, 1.5 μm, 1.55 μm, 1.6 μm, 1.65 μm, 1.7 μm, 1.75 μm, 1.8 μm, 1.85 μm, 1.9 μm, 1.95 μm, 2.0 μm, or a value falling within a range formed by any two thereof. In some embodiments, $D_{n10}$ of the negative electrode material is greater than or equal to 0.5 μm. In this application, $D_{n10}$ is a particle diameter value at which 10% of the particles of the negative electrode material are smaller than this value in a number-based particle size distribution.

In some embodiments, $D_{v10}$ and $D_{v90}$ of the negative electrode material satisfy: $5 \leq D_{v90}/D_{v10} \leq 25$. The $D_{v90}/D_{v10}$ ratio indicates the concentration of particle size distribution in the negative electrode material. The higher the ratio, the more dispersed the particle size distribution of the material. The lower the ratio, the more concentrated the particle size distribution of the material. When the volume fraction of the negative electrode material remains constant, the larger the particle size of the material, the wider the distribution of the particles, and the lower the viscosity of the negative electrode slurry. This can increase the solid content and reduce the coating difficulty. Meanwhile, when the particle size distribution is relatively wide, small particles can fill in the voids of large particles, thereby increasing the compaction density of the electrode plate, and improving the volumetric energy density of the secondary battery. In addition, the particle morphology also exerts a great impact on the C-rate performance and the low-temperature performance of the secondary battery. The

$D_{v90}/D_{v10}$ ratio of the negative electrode material of this application falls within the above range. Therefore, the secondary battery containing the negative electrode material achieves a high energy density without impairing the electrical performance such as C-rate performance and low-temperature performance of the battery. In some embodiments, the $D_{v90}/D_{v10}$ ratio is 6, 7, 8, 9, 10, 11, 12, 13, 14, 16, 17, 18, 20, 22, 24, or a value falling within a range formed by any two thereof. In some embodiments, $5 \leq D_{v90}/D_{v10} \leq 15$.

In some embodiments, $D_{v90}$ of the negative electrode material is 30 μm to 65 μm. In some embodiments, $D_{v10}$ of the negative electrode material is 2 μm to 8 μm. Overlarge particles of the negative electrode material deteriorate the slurry processing performance, and undersized particles of the negative electrode material reduce the first-cycle Coulombic efficiency of the material. In some embodiments, $D_{v90}$ is 32 μm, 34 μm, 36 μm, 38 μm, 40 μm, 43 μm, 45 μm, 47 μm, 50 μm, 52 μm, 55 μm, 57 μm, 59 μm, 62 μm, 64 μm, or a value falling within a range formed by any two thereof. In some embodiments, $D_{v90}$ is 30 μm to 60 μm. In some embodiments, $D_{v10}$ is 3.5 μm, 4 μm, 4.5 μm, 5 μm, 5.5 μm, 6 μm, 6.5 μm, or a value falling within a range formed by any two thereof. In some embodiments, $D_{v10}$ is 3 μm to 7 μm. In this application, $D_{v10}$ is a particle diameter value at which 10% of the particles of the negative electrode material are smaller than this value in a volume-based particle size distribution. $D_{v90}$ is a particle diameter value at which 90% of the particles of the negative electrode material are smaller than this value in a volume-based particle size distribution.

In some embodiments, the powder compaction density of the negative electrode material pressed with a force equivalent to 5 tons is C, satisfying: $1.5$ g/cm$^3$ $\leq$ C $\leq$ 2.5 g/cm$^3$. The powder compaction density represents the compressibility of the negative electrode material being pressed. The higher the powder compaction density, the more compressible the material being pressed, and the higher the volumetric energy density of the secondary battery. The powder compaction density of the negative electrode material of this application falls within the above range. Therefore, the secondary battery containing the negative electrode material achieves a high energy density. In some embodiments, C is 1.6 g/cm$^3$, 1.7 g/cm$^3$, 1.85 g/cm$^3$, 1.9 g/cm$^3$, 2.0 g/cm$^3$, 2.05 g/cm$^3$, 2.15 g/cm$^3$, 2.2 g/cm$^3$, 2.3 g/cm$^3$, 2.4 g/cm$^3$, or a value falling within a range formed by any two thereof. In some embodiments, $1.8$ g/cm$^3$ $\leq$ C $\leq$ 2.1 g/cm$^3$.

In some embodiments, the carbon-based material includes graphite. The graphite includes one or more of artificial graphite or natural graphite. In some embodiments, a method for preparing the carbon-based material includes: making one or more of natural graphite or artificial graphite into a graphitic composite material, and then spheroidizing, coating, and carbonizing the graphitic composite material.

In some embodiments, a process of preparing the graphitic composite material includes: Dissolving one or more of natural graphite or artificial graphite and polymethylmethacrylate (PMMA) simultaneously in N-N dimethylformamide (DMF), stirring the solution at a temperature of 50 °C to 80 °C for 10 h to 14 h, filtering the solution and collecting sediment, washing the sediment with deionized water and ethanol for 2 to 4 times, and drying the sediment thoroughly at a temperature of 60 °C to 90 °C to obtain a graphitic composite material precursor. Heating the graphitic composite material precursor in a tube furnace until 1000 °C to 1200 °C at a heating rate of 8 °C/min to 16 °C/min; subsequently, passing a gas of $CH_4$, $C_2H_2$, and $H_2$ mixed at the mixing ratio of (5 to 10): (5 to 10): (80 to 85) into the tube furnace; keeping the temperature for 8 h to 12 h, and then naturally cooling the precursor to a room temperature to obtain a finished graphitic composite material.

In some embodiments, the spheroidization process includes: Applying continuous impact forces, compression forces, and shear forces from a turntable, an inner wall, and particle interstices to the mixture containing both the graphitic composite material and a dispersant solution, so as to spheroidize the graphitic composite material. In some embodiments, the spheroidization duration is 10 min to 20 min, for example, 12 min, 14 min, 16 min, or 18 min. In some embodiments, the impact forces, compression forces, and shear forces are applied to the mixture by using a spheroidization apparatus, thereby impacting, rubbing, shearing, bending, and folding the mixture, and in turn, removing the angular corner of the graphitic composite material and, at the same time, fixing micropowder onto larger particles. In some embodiments, the spheroidization apparatus is a mixing granulator. In some embodiments, the rotation speed of the spheroidization apparatus is 30 Hz to 50 Hz, for example, 35 Hz, 40 Hz, or 45 Hz.

In some embodiments, the dispersant solution is an aqueous solution of carboxymethyl cellulose (CMC). In some embodiments, the mass percent of the carboxymethyl cellulose in the dispersant solution is 0.5% to 2%, for example, 0.7%, 1.0%, 1.3%, 1.5%, or 1.7%. In some embodiments, based on the mass of the graphitic composite material, the mass percent of the dispersant solution is 5% to 20%, for example, 7%, 10%, 13%, 15%, 17%, or 19%.

In some embodiments, the coating process includes: Coating the spheroidized graphitic composite material with pitch. In some embodiments, based on the mass of the spheroidized graphitic composite material, the mass percent of the pitch is 2% to 15%, for example, 3%, 4%, 5%, 6%, 7%, 8%, 9%, 10%, 11%, 12%, 13%, or 14%. In some embodiments, the temperature of carbonization is 900 °C to 1500 °C, for example, 950 °C, 1000 °C, 1050 °C, 1100 °C, 1150 °C, 1200 °C, 1250 °C, 1300 °C, 1350 °C, 1400 °C, or 1450 °C. In some embodiments, the duration of carbonization is 3 h to 10 h, for example, 4 h, 5 h, 6 h, 7 h, 8 h, or 9 h.

## II. Secondary battery

The secondary battery according to this application includes a negative electrode. The negative electrode includes a negative current collector and a negative active material layer disposed on at least one surface of the negative current collector. The negative active material layer includes the negative electrode material according to the first aspect.

In some embodiments, the negative electrode further includes a conductive coating layer located between the negative active material layer and the negative current collector. In some embodiments, the conductive coating layer includes at least one of carbon fibers, Ketjen black, acetylene black, carbon nanotubes, or graphene. The conductive coating layer serves to conduct electrons, and reduces the charge transfer resistance significantly, thereby further enhancing the kinetic performance of the secondary battery. In some embodiments, the thickness of the conductive coating layer is 0.5 $\mu$m to 1.2 $\mu$m. In some embodiments, the thickness of the conductive coating layer is 0.6 $\mu$m, 0.7 $\mu$m, 0.8 $\mu$m, 0.9 $\mu$m, 1.0 $\mu$m, 1.1 $\mu$m, or a value falling within a range formed by any two thereof.

In some embodiments, the negative current collector includes: copper foil, aluminum foil, nickel foil, stainless steel foil, titanium foil, foamed nickel, foamed copper, a conductive-metal-clad polymer substrate, or any combination thereof.

In some embodiments, the negative active material layer further includes a binder and a conductive agent. In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, nylon, or the like.

In some embodiments, the conductive agent includes, but is not limited to, a carbon-based material, a metal-based material, a conductive polymer, or a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fibers, copper, nickel, aluminum, or silver. In some embodiments, the conductive polymer is a polyphenylene derivative.

The secondary battery according to this application further includes a positive electrode. The positive electrode includes a positive current collector and a positive active material layer. The positive active material layer includes a positive active material, a binder, and a conductive agent.

According to some embodiments of this application, the positive current collector may be a metal foil or a composite current collector. For example, the positive current collector may be an aluminum foil. The composite current collector may be formed by disposing a metal material (copper, copper alloy, nickel, nickel alloy, titanium, titanium alloy, silver, silver alloy, and the like) on a polymer substrate.

According to some embodiments of this application, the positive active material includes at least one of lithium cobalt oxide, lithium nickel cobalt manganese oxide, lithium nickel manganese aluminum oxide, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, or lithium titanium oxide. In some embodiments, the binder includes a binder polymer, such as at least one of polyvinylidene fluoride, polytetrafluoroethylene, polyolefins, sodium carboxymethylcellulose, lithium carboxymethylcellulose, modified polyvinylidene fluoride, modified SBR rubber, or polyurethane. In some embodiments, the polyolefin binders include at least one of polyethylene, polypropylene, polyvinyl ester, polyvinyl alcohol, or polyacrylic acid. In some embodiments, the conductive agent includes a carbon-based material such as natural graphite, artificial graphite, carbon black, acetylene black, Ketjen black, or carbon fiber; a metal-based material such as metal powder or metal fiber containing copper, nickel, aluminum, silver, or the like; a conductive polymer such as a polyphenylene derivative; or any mixture thereof.

The secondary battery according to this application further includes a separator. The material and the shape of the separator used in the secondary battery according to this application are not particularly limited, and may be based on any technology disclosed in the prior art. In some embodiments, the separator includes a polymer or an inorganic compound or the like formed from a material that is stable to the electrolyte solution disclosed in this application.

For example, the separator may include a substrate layer and a surface treatment layer. The substrate layer is a non-woven fabric, film or composite film, which, in each case, is of a porous structure. The material of the substrate layer is at least one selected from polyethylene, polypropylene, polyethylene terephthalate, and polyimide. Specifically, the material of the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer. The surface treatment layer may be a polymer layer or an inorganic compound layer, or a layer formed by mixing a polymer and an inorganic compound. The inorganic compound layer includes inorganic particles and a binder. The inorganic particles are at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl alkoxide, poly methyl methacrylate, polytetrafluoroethylene, or polyhexafluoropropylene. The polymer layer includes a polymer. The material of the polymer is at least one selected from polyamide, polyacrylonitrile, acrylate polymer, polyacrylic acid, polyacrylic acid sodium salt, polyvinylpyrrolidone, polyvinyl alkoxide, polyvinylidene difluoride, or poly(vinylidene fluoride-co-hexafluoropropylene).

The secondary battery according to this application further includes an electrolyte solution. The electrolyte solution applicable to this application may be an electrolyte solution known in the prior art.

According to some embodiments of this application, the electrolyte solution includes an organic solvent, a lithium salt, and optionally an additive. The organic solvent in the electrolyte solution of this application may be any organic solvent known in the prior art suitable for use as a solvent of the electrolyte solution. An electrolyte used in the electrolyte solution according to this application is not limited, and may be any electrolyte known in the prior art. The additive in the electrolyte solution according to this application may be any additive known in the prior art suitable for use as an additive in the electrolyte solution. In some embodiments, the organic solvent includes, but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, such as at least one of 1,3-dioxane (DOL) or ethylene glycol dimethyl ether (DME). In some embodiments, the lithium salt includes at least one of an organic lithium salt or an inorganic lithium salt. In some embodiments, the lithium salt includes, but is not limited to: lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bis(oxalate)borate $LiB(C_2O_4)_2$ (LiBOB), or lithium difluoro(oxalate)borate $LiBF_2(C_2O_4)$ (LiDFOB). In some embodiments, the additive includes at least one of fluoroethylene carbonate or adiponitrile.

According to some embodiments of this application, the secondary battery according to this application includes, but is not limited to: a lithium-ion battery or a sodium-ion battery. In some embodiments, the secondary battery is a lithium-ion battery.

### III. Electronic device

This application further provides an electronic device. The electronic device includes the secondary battery according to the second aspect of this application.

The electronic device or apparatus according to this application is not particularly limited. In some embodiments, the electronic devices of this application include, but are not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Unless otherwise expressly specified, reagents, materials, and instruments used in the following embodiments and comparative embodiments are all commercially available.

### Embodiments and Comparative Embodiments

### Embodiment 1

### Preparing a negative electrode material

Dissolving 95 grams of artificial graphite together with 5 grams of polymethylmethacrylate (PMMA) in 100 mL of N-N dimethylformamide (DMF). Stirring the solution at 70 °C for 12 h, filtering the solution and collecting sediment, washing the sediment with deionized water and ethanol for 2 times, and drying the sediment thoroughly at 80 °C to obtain a graphitic composite material precursor. Heating the graphitic composite material precursor in a tube furnace until 1100 °C at a heating rate of 10 °C/min. Subsequently, passing a gas of $CH_4$, $C_2H_2$, and $H_2$ mixed at a mixing ratio of 5: 10: 85 into the tube furnace. Keeping the temperature for 10 h, and then naturally cooling the precursor to a room temperature to obtain a graphitic composite material. Mixing the graphitic composite material with 10 wt% CMC aqueous solution in which the solid content is 1%. Spheroidizing the mixture for 15 min by using a spheroidization device at a rotation speed of 40 Hz. Coating the spheroidized mixture with 5 wt% pitch. Finally, heating the coated mixture to 1000 °C at a rate of 5 °C/min, keeping the temperature for 5 h, and then naturally cooling the coated mixture to a room temperature to obtain a carbon-based material, that is, a negative electrode material.

**Preparing a negative electrode**

Mixing the above-prepared negative electrode material, styrene-butadiene rubber (SBR for short) as a binder, and sodium carboxymethyl cellulose (CMC for short) as a thickener at a mass ratio of 97: 1.5: 1.5, and then adding an appropriate amount of deionized water solvent and stirring well to form a homogeneous negative electrode slurry. Coating a current collector copper foil with the slurry, and performing oven-drying and cold-pressing to obtain a negative electrode plate.

**Preparing a positive electrode**

Mixing lithium cobalt oxide (chemical formula: $LiCoO_2$) as a positive active material, acetylene black as a conductive agent, and polyvinylidene difluoride (PVDF for short) as a binder at a mass ratio of 96.3: 2.2: 1.5 in an appropriate amount of N-methyl-pyrrolidone (NMP for short) solvent, and stirring well to form a homogeneous positive electrode slurry. Coating a current collector aluminum foil with the slurry, and performing oven-drying and cold-pressing to obtain a positive electrode plate.

**Preparing an electrolyte solution**

Mixing ethylene carbonate (EC), propylene carbonate (PC), ethyl methyl carbonate (EMC), and diethyl carbonate (DEC) in a dry argon atmosphere glovebox at a mass ratio of EC: PC: EMC: DEC = 1: 3: 2: 4. Adding fluoroethylene carbonate and vinylene carbonate, dissolving and stirring the mixture well, and then adding a lithium salt $LiPF_6$, and mixing well to obtain an electrolyte solution. The mass percent of the $LiPF_6$ is 12.5%, the mass percent of the fluoroethylene carbonate is 3%, and the mass percent of the vinylene carbonate is 1%, based on the mass of the electrolyte solution.

**Preparing a lithium-ion battery**

Stacking the positive electrode, the separator (porous polythene polymer film), and the negative electrode sequentially in such a way that the separator is located between positive electrode and the negative electrode to serve a separation function, and then winding the stacked structure to obtain an electrode assembly. Welding tabs to the electrode assembly, and then putting the electrode assembly into an outer package made of an aluminum laminated film foil. Injecting the above-prepared electrolyte solution into the dried electrode assembly, and performing steps such as vacuum packaging, standing, chemical formation, shaping, and capacity test to obtain a pouch-type lithium-ion battery.

**Embodiments 2 to 10 and Comparative Embodiment 1**

**Preparing a negative electrode material**

The preparation process of the negative electrode material is similar to that in Embodiment 1, but differs in that the corresponding negative electrode material is prepared by adjusting the parameters in the preparation process such as the ratio between the carbon-based material and the PMMA, the rotation speed of the spheroidization device, the percentage of residual carbon in the coating pitch, and the carbonization temperature. Specific preparation parameters are shown in Table a:

**Table a**

| Embodiments and comparative embodiments | Ratio between carbon-based material and PMMA | Rotation speed of spheroidization device (Hz) | Percentage of residual carbon in coating pitch (%) | Carbonization temperature (°C) |
|---|---|---|---|---|
| Embodiment 1 | 95: 5 | 40 | 5 | 1000 |
| Embodiment 2 | 90: 10 | 50 | 6 | 950 |
| Embodiment 3 | 85: 15 | 45 | 7 | 1050 |
| Embodiment 4 | 95: 5 | 35 | 8 | 1100 |
| Embodiment 5 | 90: 10 | 50 | 9 | 1150 |
| Embodiment 6 | 85: 15 | 45 | 10 | 1200 |

(continued)

| Embodiments and comparative embodiments | Ratio between carbon-based material and PMMA | Rotation speed of spheroidization device (Hz) | Percentage of residual carbon in coating pitch (%) | Carbonization temperature (°C) |
|---|---|---|---|---|
| Embodiment 7 | 95: 5 | 40 | 11 | 1250 |
| Embodiment 8 | 90: 10 | 35 | 12 | 1300 |
| Embodiment 9 | 85: 15 | 50 | 13 | 1400 |
| Embodiment 10 | 95: 5 | 45 | 14 | 1500 |
| Comparative Embodiment 1 | 100: 0 | 0 | 5 | 1000 |

The preparation processes of the positive electrode, electrolyte solution, lithium-ion battery are the same as those in Embodiment 1.

**Embodiments 11 to 20**

**Preparing a negative electrode material**

The preparation process of the negative electrode material is similar to that in Embodiment 5, but differs in that the $C_{004}/C_{110}$ ratio of the negative electrode material is adjusted by adjusting the solid content of the CMC solution. In the preparation processes in Embodiments 11 to 20, the solid content of the CMC solution is 0.8%, 0.6%, 1.2%, 1.0%, 1.6%, 0.4%, 0.2%, 1.8%, 2.0%, and 1.4%, respectively.
The preparation processes of the positive electrode, electrolyte solution, lithium-ion battery are the same as those in Embodiment 5.

**Embodiments 21 to 30**

**Preparing a negative electrode material**

The preparation process of the negative electrode material is similar to that in Embodiment 14, but differs in that the $L_a$ and $L_c$ values of the negative electrode material are adjusted by adjusting the heating rate in the carbonization process. In the preparation process in Embodiments 21 to 30, the heating rate in the carbonization process is 2.5 °C/min, 6.5 °C/min, 9.5 °C/min, 10 °C/min, 1.5 °C/min, 4.5 °C/min, 5 °C/min, 8 °C/min, 8.5 °C/min, and 9 °C/min, respectively.
The preparation processes of the positive electrode, electrolyte solution, lithium-ion battery are the same as those in Embodiment 14.

**Embodiments 31 to 40**

The preparation process of the negative electrode material is similar to that in Embodiment 25, but differs in that the particle size of the negative electrode material is adjusted by adjusting the duration of spheroidization. In the preparation process in Embodiments 31 to 40, the duration of spheroidization is 2 min, 4 min, 6 min, 8 min, 10 min, 12 min, 14 min, 16 min, 18 min, and 20 min, respectively.
The preparation processes of the positive electrode, electrolyte solution, lithium-ion battery are the same as those in Embodiment 25.

**Embodiments 41 to 45**

**Preparing a negative electrode material**

The preparation process of the negative electrode material is the same as that in Embodiment 35.

**Preparing a negative electrode**

The preparation process of the negative electrode is similar to that in Embodiment 35, but differs in that a conductive coating layer is added.

The preparation processes of the positive electrode, electrolyte solution, lithium-ion battery are the same as those in Embodiment 35.

**Test Methods**

1. XRD test for the negative electrode material

Using an X-ray powder diffractometer (XRD) (model: Bruker D8 ADVANCE) to test the negative electrode material under the following conditions: the target material is Cu K$\alpha$, the voltage/current is 40 KV/40 mA, the scanning angle range is 5° to 80°, the scanning step length is 0.00836°, and the duration of each step length is 0.3 s, so as to obtain an XRD curve.

The diffraction peak a is exhibited at a diffraction angle $2\theta$ of 43° to 44°, and the diffraction peak b is exhibited at a diffraction angle $2\theta$ of 45° to 47°. $I_a$ and $I_b$ are maximum intensity values of the diffraction peak a and the diffraction peak b, respectively.

The (004) crystal plane diffraction peak, that is, the (004) peak in the XRD pattern of the negative electrode material, is exhibited at a diffraction angle $2\theta$ of 52° to 57°. The (110) crystal plane diffraction peak, that is, the (110) peak in the XRD pattern of the negative electrode material, is exhibited at a diffraction angle $2\theta$ of 75° to 80°. The integrated area of the (004) peak is denoted as $C_{004}$, and the integrated area of the (110) peak is denoted as $C_{110}$, so that a $C_{004}/C_{110}$ ratio of the negative electrode material is calculated.

2. Testing the powder compaction density

The powder compaction density is determined with reference to the standard GB/T *24533-2009 Graphite Negative Electrode Materials for Lithium-ion Batteries.* A specific test method is: Weighing out 1.0000±0.0500 gram of a negative electrode material as a specimen, putting the specimen into a CARVER#3619 (13 mm) test mold, and then putting test mold with the specimen into a SUNSTEST UTM7305 instrument. Applying a pressure equivalent to 0.3 t, 0.5 t, 0.75 t, 1.0 t, 1.5 t, 2.0 t, 2.5 t, 3.0 t, 4.0 t, and 5.0 t, separately, where the pressure increase rate is 10 mm/min, the duration of keeping the increased pressure is 30 s, the pressure relief rate is 30 mm/min, and the duration of keeping the relieved pressure is 10 s.

In this application, the powder compaction density is a compaction density measured by applying a pressure equivalent to 5 tons. The calculation formula of the compaction density is: compaction density = mass of the material specimen/(force-bearing area of the material specimen $\times$ thickness of the specimen).

3. Testing the particle size ($D_{v10}$, $D_{v90}$, and $D_{n10}$)

The particle size test is performed with reference to the standard GB/T 19077-2016. A specific process is: Weighing out 1 gram of the negative electrode material as a specimen, and mixing the specimen with 20 mL of deionized water and a tiny amount of dispersant evenly; putting the mixture in an ultrasonication device, performing ultrasonication for 5 minutes, and then pouring the solution into a Hydro 2000SM feeding system for testing, where the test instrument is Mastersizer 3000 manufactured by Malvern. In the test process, when a laser beam passes through the dispersed particle specimens, the particle size measurement is performed by measuring the intensity of scattered light. The resulting data is then used to analyze and calculate the particle size distribution that forms the scattering pattern. $D_{v10}$ of the negative electrode material is a particle diameter value at which the cumulative volume of the specimen particles of the negative electrode material reaches 10% in a volume-based particle size distribution curve viewed from the small-diameter side. $D_{v99}$ of the negative electrode material is a particle diameter value at which the cumulative volume of the specimen particles of the negative electrode material reaches 99% in a volume-based particle size distribution curve viewed from the small-diameter side. $D_{n10}$ of the negative electrode material is a particle diameter value at which 10% of the specimen particles of the negative electrode material are smaller than this value in a number-based particle size distribution curve. Testing each specimen of particles for three times at a refractive index of 1.8, and averaging out the three measured values to obtain the particle size.

4. Testing the gravimetric capacity

(1) Preparing a button battery: Assembling the negative electrode prepared in the above embodiment, a lithium sheet, the separator, the electrolyte solution, a steel sheet, foamed nickel, and a button battery case together to obtain a button battery. Leaving the button battery to stand for 6 hours before testing.

(2) Putting the button battery onto a LAND tester to perform a test in the following process: Discharging the button battery at a current of 0.05 C until the voltage reaches 5 mV, and leaving the button battery to stand for 5 min, discharging the button battery at a current of 0.05 mA until the voltage reaches 5 mV, discharging the button battery at a current of 0.01 mA until the voltage reaches 5 mV, and then charging the button battery at a current of 0.1 C until the voltage reaches 2.0 V, so as to obtain a charge capacity, and finally, dividing the charge capacity by the mass of the active material to obtain the gravimetric capacity of the negative electrode material.

5. Testing a direct-current resistance (DCR) of a lithium-ion battery

1) Setting the test temperature to 25 °C.
2) Leaving the battery to stand for 60 min.
3) Charging the battery at a constant current of 0.5 C until the voltage reaches 4.43 V, and then charging the battery at a constant voltage until the current drops to 0.025 C.
4) Leaving the battery to stand for 10 min.
Discharging the battery at a temperature of 25 °C.
5) Discharging the battery at a direct current of 0.1 C until the voltage drops to 3 V.
6) Leaving the battery to stand for 10 min.
7) Charging the battery at a constant current of 0.5 C until the voltage reaches 4.43 V, and then charging the battery at a constant voltage until the current drops to 0.025 C.
8) Leaving the battery to stand for 1 h.
9) Discharging the battery at a direct current of 0.1 C for a period of 10 s.
10) Discharging the battery at a direct current of 1 C for a period of 1 s.
11) Leaving the battery to stand for 1 h.
12) Discharging the battery at a direct current of 0.5 C for a period of 6 min.
13) Skipping to step 15 if the voltage is less than or equal to 2.5 V.
14) Repeating steps 8 to 13 for 26 times.
15) Leaving the battery to stand for 10 min.
16) Charging the battery at a constant current of 0.5 C until the voltage reaches 3.95 V, and then charging the battery at a constant voltage until the current drops to 0.025 C.
17) Leaving the battery to stand for 10 min.

Measuring the DCR of the battery fading to 70% SOC, and the measured value is the test result.

**Test Results**

Table 1 shows how the $I_a/I_b$ ratio affects the performance of a lithium-ion battery, where $I_a$ is the intensity of the diffraction peak exhibited at a diffraction angle 2θ of 43° to 44°, and $I_b$ is the intensity of the diffraction peak exhibited at a diffraction angle 2θ of 45° to 47° in an XRD pattern of the negative electrode material. In the embodiments and comparative embodiments in Table 1, $L_c$ is 10.7 nm, $L_a$ is 102 nm, and the $C_{004}/C_{110}$ ratio is 4.71.

**Table 1**

| Embodiments and comparative embodiments | $I_a$ | $I_b$ | $I_a/I_b$ ratio | DCR (mΩ) |
|---|---|---|---|---|
| Embodiment 1 | 1107 | 235 | 4.71 | 46.26 |
| Embodiment 2 | 691 | 172 | 4.02 | 46.50 |
| Embodiment 3 | 525 | 92 | 5.71 | 45.30 |
| Embodiment 4 | 601 | 152 | 3.95 | 47.68 |
| Embodiment 5 | 467 | 134 | 3.48 | 48.09 |
| Embodiment 6 | 1115 | 550 | 2.03 | 49.70 |
| Embodiment 7 | 1884 | 327 | 5.76 | 45.00 |
| Embodiment 8 | 1142 | 446 | 2.56 | 48.89 |
| Embodiment 9 | 2259 | 543 | 4.16 | 46.59 |

(continued)

| Embodiments and comparative embodiments | $I_a$ | $I_b$ | $I_a/I_b$ ratio | DCR (mΩ) |
|---|---|---|---|---|
| Embodiment 10 | 1072 | 277 | 3.87 | 47.73 |
| Embodiment 11 | 1772 | 646 | 7.20 | 49.41 |
| Comparative Embodiment 1 | Nonexistent | Nonexistent | 0 | 50.11 |

As can be seen from Table 1, the negative electrode material exhibits a diffraction peak at a diffraction angle $2\theta$ of 43° to 44° and a diffraction peak at a diffraction angle $2\theta$ of 45° to 47° in the XRD pattern. The DCR of the lithium-ion battery is relatively low when the $I_a/I_b$ ratio is 2 to 6, where, $I_a$ is the intensity of the diffraction peak exhibited at the diffraction angle of 43° to 44°, and $I_b$ is the intensity of the diffraction peak exhibited at the diffraction angle of 45° to 47°.

On the basis of Embodiment 5, Table 2 further investigates how the $C_{004}/C_{110}$ ratio of the negative electrode material affects the performance of the lithium-ion battery.

**Table 2**

| Embodiment | $C_{004}/C_{110}$ ratio | DCR (mΩ) |
|---|---|---|
| Embodiment 5 | 4.71 | 48.09 |
| Embodiment 11 | 2.11 | 37.55 |
| Embodiment 12 | 2.34 | 36.13 |
| Embodiment 13 | 1.98 | 36.54 |
| Embodiment 14 | 2.08 | 37.76 |
| Embodiment 15 | 1.77 | 38.27 |
| Embodiment 16 | 2.59 | 36.91 |
| Embodiment 17 | 2.96 | 37.12 |
| Embodiment 18 | 1.56 | 36.60 |
| Embodiment 19 | 1.42 | 36.25 |
| Embodiment 20 | 1.82 | 36.32 |

As can be seen from Table 2, when the $C_{004}/C_{110}$ ratio of the negative electrode material powder falls within a range of 1 to 3, the active material is highly isotropic, and the lithium-ion battery can exert good kinetic performance.

On the basis of Embodiment 14, Table 3 further investigates how the $L_a$ and $L_c$ values of the negative electrode material affect the performance of the lithium-ion battery.

**Table 3**

| Embodiment | $L_a$ (nm) | $L_c$ (nm) | Gravimetric capacity (mAh/g) | DCR (mΩ) |
|---|---|---|---|---|
| Embodiment 14 | 102 | 19.7 | 348.7 | 37.76 |
| Embodiment 21 | 141.5 | 29.8 | 355.8 | 35.27 |
| Embodiment 22 | 127.6 | 25 | 352.9 | 34.46 |
| Embodiment 23 | 117.8 | 24 | 350.6 | 34.73 |
| Embodiment 24 | 112.5 | 28.3 | 354.9 | 35.19 |
| Embodiment 25 | 151.9 | 27.7 | 358.7 | 35.35 |
| Embodiment 26 | 136.7 | 27.7 | 353.2 | 35.20 |
| Embodiment 27 | 132.7 | 28.0 | 357.1 | 35.43 |
| Embodiment 28 | 123.1 | 22.1 | 355.3 | 34.68 |
| Embodiment 29 | 120.4 | 23.3 | 353.3 | 34.80 |
| Embodiment 30 | 118.3 | 25.1 | 350.8 | 35.19 |

As can be seen from Table 3, when $L_a$ is 110 nm to 160 nm and $L_c$ is 20 nm to 30 nm, the gravimetric capacity of the negative electrode material is greater than or equal to 350 mAh/g, and the DCR of the lithium-ion battery is further improved.

On the basis of Embodiment 25, Table 4 further investigates how the particle diameter and the particle size distribution of the negative electrode material affect the performance of the lithium-ion battery.

**Table 4**

| Embodiment | $D_{n10}$ ($\mu$m) | $D_{v90}$ ($\mu$m) | $D_{v10}$ ($\mu$m) | $D_{v90}/D_{v10}$ | Powder compaction density (g/cm$^3$) | First-cycle Coulombic efficiency (%) | DCR (m$\Omega$) |
|---|---|---|---|---|---|---|---|
| Embodiment 25 | 0.44 | 62.9 | 2.8 | 22 | 1.7 | 86.79 | 35.35 |
| Embodiment 31 | 0.58 | 52.5 | 5.1 | 10 | 1.9 | 88.16 | 32.74 |
| Embodiment 32 | 0.68 | 42.6 | 4.4 | 10 | 2.0 | 88.15 | 34.70 |
| Embodiment 33 | 0.87 | 31.2 | 3.1 | 10 | 1.7 | 88.13 | 34.37 |
| Embodiment 34 | 0.74 | 31.7 | 3.8 | 8 | 1.7 | 87.97 | 33.67 |
| Embodiment 35 | 0.65 | 33.8 | 3 | 8 | 2.0 | 87.57 | 34.16 |
| Embodiment 36 | 0.97 | 62.9 | 4.9 | 13 | 2.1 | 89.90 | 34.04 |
| Embodiment 37 | 1.52 | 30.3 | 3.7 | 8 | 1.9 | 88.14 | 33.63 |
| Embodiment 38 | 1.11 | 51.4 | 3.4 | 15 | 2.0 | 89.23 | 33.70 |
| Embodiment 39 | 1.34 | 45.4 | 4.2 | 11 | 1.9 | 87.03 | 33.05 |
| Embodiment 40 | 0.57 | 76.8 | 6 | 13 | 1.9 | 88.53 | 33.99 |

As can be seen from Table 4, when the $D_{n10}$ of the negative electrode material is greater than or equal to 0.5 $\mu$m, the first-cycle Coulombic efficiency of the lithium-ion battery is enhanced to some extent while the DCR is reduced accordingly. The DCR of the lithium-ion battery is alleviated to some extent when the negative electrode material satisfies $5 \leq D_{v90}/D_{v10} \leq 15$, $D_{v90}$ is 30 $\mu$m to 60 $\mu$m, and $D_{v10}$ is 2 $\mu$m to 8 $\mu$m.

On the basis of Embodiment 35, Table 5 further investigates how the thickness and type of the conductive coating layer in the negative electrode affect the performance of the lithium-ion battery.

**Table 5**

| Embodiment | Thickness of conductive coating layer ($\mu$m) | Type of conductive coating layer | DCR (m$\Omega$) |
|---|---|---|---|
| Embodiment 35 | None | None | 34.16 |
| Embodiment 41 | 0.6 | Graphene | 28.16 |
| Embodiment 42 | 0.8 | Graphene | 26.01 |
| Embodiment 43 | 1.0 | Graphene | 26.60 |
| Embodiment 44 | 1.2 | Graphene | 24.39 |
| Embodiment 45 | 1.2 | Acetylene black | 23.44 |

As can be seen from Table 5, the DCR of the lithium-ion battery is relatively low when the thickness of the conductive coating layer falls within a range of 0.5 $\mu$m to 1.2 $\mu$m.

Although illustrative embodiments have been demonstrated and described above, a person skilled in the art understands that the foregoing embodiments are never to be construed as a limitation on this application, and changes, replacements, and modifications may be made to the embodiments without departing from the spirit, principles, and scope of this application.

**Claims**

**1.** A negative electrode material, containing a carbon-based material, wherein, in an X-ray diffraction pattern of the negative electrode material tested by X-ray diffractometry, a diffraction peak a is exhibited at a diffraction angle $2\theta$ of $43°$ to $44°$, a diffraction peak b is exhibited at a diffraction angle $2\theta$ of $45°$ to $47°$, an intensity of the diffraction peak a is $I_a$, and an intensity of the diffraction peak b is $I_b$, satisfying: $I_a/I_b > 1$.

2. The negative electrode material according to claim 1, wherein $2 \leq I_a/I_b \leq 6$.

3. The negative electrode material according to claim 1, wherein $400 \leq I_a \leq 2500$; and/or $0 \leq I_b \leq 600$.

4. The negative electrode material according to claim 1, wherein the negative electrode material satisfies at least one of the following conditions (i) to (vi):

> (i) as tested by the X-ray diffractometry, a ratio of a peak area $C_{004}$ of a (004) crystal plane diffraction peak to a peak area $C_{004}$ of a (110) crystal plane diffraction peak of the negative electrode material satisfies: $1 \leq C_{004}/C_{110} \leq 4$;
> (ii) as tested by the X-ray diffractometry, an average stacking thickness of the negative electrode material along an a-axis direction is $L_a$, satisfying: $100\ \text{nm} \leq L_a \leq 160\ \text{nm}$, and an average stacking thickness of the negative electrode material along a c-axis direction is $L_c$, satisfying: $18\ \text{nm} \leq L_c \leq 30\ \text{nm}$;
> (iii) $D_{n10}$ of the negative electrode material is greater than or equal to $0.4\ \mu\text{m}$;
> (iv) $D_{v10}$ and $D_{v90}$ of the negative electrode material satisfy: $5 \leq D_{v90}/D_{v10} \leq 25$;
> (v) $D_{v90}$ of the negative electrode material is $30\ \mu\text{m}$ to $65\ \mu\text{m}$, and $D_{v10}$ of the negative electrode material is $2\ \mu\text{m}$ to $8\ \mu\text{m}$; or
> (vi) a powder compaction density of the negative electrode material pressed with a force equivalent to 5 tons is C, satisfying: $1.5\ \text{g/cm}^3 \leq C \leq 2.5\ \text{g/cm}^3$.

5. The negative electrode material according to claim 4, wherein the negative electrode material satisfies at least one of the following conditions (vii) to (xii):

> (vii)

$$1 \leq C_{004}/C_{110} \leq 3;$$

> (viii)

$$110\ \text{nm} \leq L_a \leq 160\ \text{nm},\ 20\ \text{nm} \leq L_c \leq 30\ \text{nm};$$

> (ix)

$$D_{n10} \geq 0.5\ \mu\text{m};$$

> (x)

$$5 \leq D_{v90}/D_{v10} \leq 15;$$

> (xi) $D_{v90}$ is $30\ \mu\text{m}$ to $60\ \mu\text{m}$, and $D_{v10}$ is $3\ \mu\text{m}$ to $7\ \mu\text{m}$; or
> (xii)

$$1.8\ \text{g/cm}^3 \leq C \leq 2.1\ \text{g/cm}^3.$$

6. The negative electrode material according to claim 1, wherein the carbon-based material comprises graphite.

7. The negative electrode material according to claim 1, wherein a method for preparing the carbon-based material comprises: making a graphite material into a graphitic composite material, and then spheroidizing, coating, and carbonizing the graphitic composite material.

8. A secondary battery, comprising a negative electrode, wherein the negative electrode comprises a negative current collector and a negative active material layer disposed on at least one surface of the negative current collector, and the negative active material layer comprises the negative electrode material according to any one of claims 1 to 7.

9. The secondary battery according to claim 8, wherein the negative electrode further comprises a conductive coating layer located between the negative active material layer and the negative current collector.

10. The secondary battery according to claim 9, wherein the conductive coating layer comprises at least one of carbon fibers, Ketjen black, acetylene black, carbon nanotubes, or graphene; and/or
a thickness of the conductive coating layer is 0.5 $\mu$m to 1.2 $\mu$m.

11. An electronic device, comprising the secondary battery according to any one of claims 8 to 10.

## XRD

FIG. 1

## DCR

FIG. 2

## INTERNATIONAL SEARCH REPORT

| International application No. |
| --- |
| **PCT/CN2022/123057** |

| A. | CLASSIFICATION OF SUBJECT MATTER |
| --- | --- |

H01M4/02(2006.01)i；H01M4/583(2010.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; VEN; ENTXT; CNKI: 负极, 石墨, 菱面体, 晶面, negative electrode, graphite, rhombohedral, crystal plane

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP H1097870 A (FUJI ELECTROCHEMICAL CO., LTD.) 14 April 1998 (1998-04-14) description, paragraphs 15-55, and figures 1-13 | 1-6, 8-11 |
| Y | JP H1097870 A (FUJI ELECTROCHEMICAL CO., LTD.) 14 April 1998 (1998-04-14) description, paragraphs 15-55, and figures 1-13 | 4-5, 7-11 |
| Y | CN 108807848 A (NINGDE CONTEMPORARY AMPEREX TECHNOLOGY CO., LTD.) 13 November 2018 (2018-11-13) description, paragraphs 2-104 | 4-5, 7-11 |
| Y | CN 113795947 A (NINGDE AMPEREX TECHNOLOGY LTD.) 14 December 2021 (2021-12-14) description, paragraphs 4-92 | 4-5, 8-11 |
| X | US 5554462 A (ACCUMULATEURS FIXES) 10 September 1996 (1996-09-10) description, column 1, last paragraph-column 10, paragraph 1, and figures 1-11 | 1-6, 8-11 |
| Y | US 5554462 A (ACCUMULATEURS FIXES) 10 September 1996 (1996-09-10) description, column 1, last paragraph-column 10, paragraph 1, and figures 1-11 | 4-5, 7-11 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **15 June 2023** | **16 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/123057**

### C. DOCUMENTS CONSIDERED TO BE RELEVANT

| Category* | Citation of document, with indication, where appropriate, of the relevant passages | Relevant to claim No. |
|---|---|---|
| A | CN 101323447 A (SHENZHEN BTR NEW ENERGY MATERIALS CO., LTD) 17 December 2008 (2008-12-17)<br>entire document | 1-11 |
| A | JP 2018163868 A (MITSUBISHI CHEMICAL CORP.) 18 October 2018 (2018-10-18)<br>entire document | 1-11 |

Form PCT/ISA/210 (second sheet) (July 2022)

**EP 4 579 769 A1**

**INTERNATIONAL SEARCH REPORT**
Information on patent family members

International application No.

**PCT/CN2022/123057**

| Patent document cited in search report | | | Publication date (day/month/year) | Patent family member(s) | | | Publication date (day/month/year) |
|---|---|---|---|---|---|---|---|
| JP | H1097870 | A | 14 April 1998 | None | | | |
| CN | 108807848 | A | 13 November 2018 | EP | 3462521 | A2 | 03 April 2019 |
| | | | | EP | 3462521 | B1 | 12 January 2022 |
| | | | | US | 2020280048 | A1 | 03 September 2020 |
| | | | | US | 11133494 | B2 | 28 September 2021 |
| | | | | US | 2019348667 | A1 | 14 November 2019 |
| | | | | US | 10700344 | B2 | 30 June 2020 |
| | | | | CN | 108807848 | B | 08 October 2019 |
| CN | 113795947 | A | 14 December 2021 | WO | 2022160332 | A1 | 04 August 2022 |
| US | 5554462 | A | 10 September 1996 | WO | 9517770 | A1 | 29 June 1995 |
| | | | | DE | 69420374 | D1 | 07 October 1999 |
| | | | | DE | 69420374 | T2 | 30 March 2000 |
| | | | | CA | 2138753 | A1 | 23 June 1995 |
| | | | | EP | 0660432 | A1 | 28 June 1995 |
| | | | | EP | 0660432 | B1 | 01 September 1999 |
| | | | | JPH | 08507408 | A | 06 August 1996 |
| | | | | FR | 2714214 | A1 | 23 June 1995 |
| | | | | FR | 2722119 | A1 | 12 January 1996 |
| CN | 101323447 | A | 17 December 2008 | CN | 101323447 | B | 22 February 2012 |
| JP | 2018163868 | A | 18 October 2018 | JP | 6828551 | B2 | 10 February 2021 |

Form PCT/ISA/210 (patent family annex) (July 2022)